# FASCICULE DE BREVET EUROPEEN

(11) **EP 3 679 233 B1**
(45) Date de publication et mention de la délivrance du brevet: **30.10.2024**
(21) Numéro de dépôt: 18774097.2
(22) Date de dépôt: 05.09.2018
(51) Int. Cl.: F02C 7/32

(54) **BOITIER D'ACCESSOIRES POUR TURBOMACHINE**
HILFSGETRIEBE FÜR TURBOMASCHINE
ACCESSORY GEARBOX FOR TURBOMACHINE

(30) Priorité: 07.09.2017 FR 1758259
(43) Date de publication de la demande: 15.07.2020
(73) Titulaire: Safran Transmission Systems, 92700 Colombes (FR)
(72) Inventeur: VIEL, Julien, 77550 Moissy-Cramayel (FR)
(74) Mandataire: Ernest Gutmann - Yves Plasseraud S.A.S.
(86) Numéro de dépôt international: PCT/FR2018/052168
(87) Numéro de publication internationale: WO 2019/048778

(56) Documents cités:
- EP-A2- 2 390 486
- WO-A1-2014/112988
- GB-A- 590 419
- US-A- 2 432 358

## Description

### DOMAINE

La présente invention concerne le domaine général des turbines à gaz et concerne plus particulièrement un boîtier pour l'entrainement d'accessoires d'une turbine à gaz.

### CONTEXTE

Le domaine d'application de l'invention est celui des turbines à gaz pour moteurs d'avions ou d'hélicoptères, ainsi que pour les groupes auxiliaires de puissance (ou APU pour « Auxiliary Power Unit »).

Les moteurs à turbine à gaz d'avions ou d'hélicoptères comportent généralement un boîtier pour l'entraînement de plusieurs accessoires de la turbine ou d'équipements annexes, tels que notamment diverses pompes pour la production d'énergie hydraulique, l'alimentation en carburant, la lubrification, des générateurs électriques pour la production de puissance électrique, etc. Un tel boîtier de relais d'accessoires est communément appelé AGB pour « Accessory GearBox ».

De façon connue en soi, un boîtier de relais d'accessoires comporte un ou plusieurs trains d'engrenages qui sont composés chacun de plusieurs roues dentées et qui sont entraînés en rotation par un arbre de transmission de puissance, ce dernier étant couplé à un arbre de la turbine. Comme l'illustre par exemple la demande FR2928696 de la demanderesse, chaque accessoire est généralement monté contre l'une des faces latérales du boîtier et comporte un arbre d'alimentation venant se coupler sur l'une des roues dentées du ou des trains d'engrenages. Outre cette fonction de support d'accessoires, ces faces latérales assurent aussi une fonction de support de roulement d'étanchéité ou encore de lubrification.

Le document US 2432358 décrit un boitier de relai d'accessoire de ce type.

Ces multiples fonctions assurées par les deux faces latérales du boîtier ont pour conséquence de faire de ces boitiers des pièces particulièrement complexes dont la fabrication s'avère délicate du fait, outre leurs grandes dimensions, des tolérances de fabrication demandées. De plus, les boîtiers pour l'entraînement d'accessoires qui, à ce jour, sont réalisés essentiellement selon un processus de fonderie ou d'usinage dans la masse, long et coûteux qu'il importe de pouvoir réduire notablement.

Il est également connu de la demande FR2977280 de guider chaque arbre portant une roue dentée par deux paliers de roulement portés par un support, lesdits paliers étant fixés sur un support solidaire d'un bord périphérique du boîtier. Ce type de montage s'avère toutefois assez encombrant du fait de l'intégration d'un palier de roulement à chacune des extrémités de chaque arbre. Il a aussi pour inconvénients de complexifier les opérations de montage et les chaines de côtes de la chaîne cinématique car de nombreuses pièces interviennent dans sa réalisation.

### RESUME DE L'INVENTION

La présente invention concerne un boîtier de relais d'accessoires selon la revendication 1.

Selon l'invention, chaque arbre est guidé en rotation par un ou plusieurs paliers de roulements tous portés par un même support intercalé entre les faces avant et arrière, ce qui permet de réduire l'épaisseur (dans une direction perpendiculaire aux faces avant et arrière) par rapport à une architecture de boîtier de la technique antérieure. Dans cette configuration, les roues dentées sont agencées de part et d'autre dudit support selon un montage en porte à faux, c'est-à-dire que tous les paliers à roulements supportant les roues dentées sont situés d'un côté seulement desdites roues dentées à la différence des montages de la technique antérieure où les paliers sont de part et d'autre des roues dentées. Cela permet ainsi de ne supporter les roulements que par une seule pièce support, de simplifier le montage de la chaîne cinématique, le contrôle des pièces, l'usinage, etc...

Le montage ainsi proposé permet de dissocier la fonction de support des roulements des autres fonctions des faces latérales avant ou arrière permettant ainsi de faciliter la conception de ces faces et limiter leurs fonctions à un fonction d'étanchéité. Ces faces avant et arrière peuvent être ainsi facilement conçues sans imposer une technique spécifique de fabrication.

De plus, la fabrication du boîtier est simplifiée puisque les paliers à roulements sont tous centrés dans des logements formés sur une même pièce, ce qui réduit également le temps d'usinage du support.

Egalement, les efforts d'engrènement sont repris par le support de roulement central et les efforts statiques et dynamiques de support des équipements sont repris par les faces avant et arrière. Cette conception rend possible une optimisation topologique de chacune des pièces du fait des fonctions dissociées entre reprise des efforts d'engrènement et des efforts de structures.

Pour cela, des calculs de structure peuvent être réalisés pour optimiser la forme et les dimensions du support. Il n'y a donc plus de matière utilisée inutilement contrairement à la technique antérieure qui mêle les deux fonctions sur plusieurs pièces.

Dans une réalisation, ledit support est formé par une platine ajourée présentant une forme en treillis comportant une pluralité de logement de réception des paliers à roulements. Les ajours permettent ainsi de réduire la masse du support.

Préférentiellement, le support peut comprendre des moyens d'accrochage du boitier sur un carter d'une turbine à gaz. La conception de ces moyens est également rendue plus simple par l'utilisation d'un seul support pour les roulements.

Au moins l'une de la face avant et de la face arrière peut supporter des équipements.

Le boîtier et ses faces avant et arrière supportant les équipements peuvent être disposés selon une orientation angulaire quelconque par rapport à l'axe de l'arbre de la turbomachine équipé dudit boîtier d'accessoires. Le boîtier peut ainsi être localisée à n'importe quel endroit du moteur, par exemple au niveau de l'espace séparant les veines primaire et secondaire ou en dans la nacelle entourant, etc.

Selon une autre caractéristique, les faces avant et arrière sont avantageusement reliées l'une à l'autre par un rebord périphérique formant avec lesdites faces avant et arrière une enceinte étanche.

Selon un mode particulier de réalisation les faces avant et arrière sont formées sur un carter monobloc comprenant une ouverture de montage dudit support précédemment mentionné.

Dans une réalisation, le boîtier comprend un obturateur qui est monobloc avec ledit support et qui est apte à obturer l'ouverture.

Préférentiellement, le support comprend des moyens de lubrification des paliers à roulements, et des dentures ce qui est rendu simple par l'utilisation d'une seule et unique pièce support supportant des roulements. Dans une conception alternative la lubrification de la chaine cinématique peut être réalisée par une canalisation externe dédiée et rapportée sur la pièce support par un système de fixation adéquat.

L'invention concerne également un moteur à turbine à gaz d'avions ou d'hélicoptères, comprenant un boîtier d'accessoires tel que décrit cidessus.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- Les figures 1A, 1B et 1C sont des vues schématiques en perspective d'une première réalisation d'un boitier pour l'entrainement d'accessoires selon l'invention ;
- La figure 2 est une vue schématique en perspective d'une deuxième réalisation d'un boitier selon l'invention ; et
- La figure 3 est une vue schématique en perspective d'une troisième réalisation d'un boitier selon l'invention.

### DESCRIPTION DETAILLEE

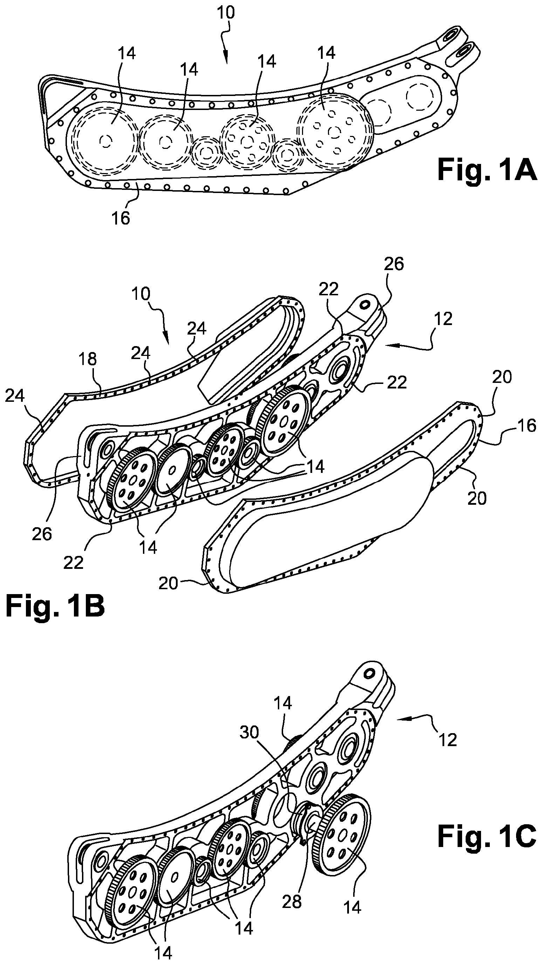

Les figures 1A, 1B et 1C représentent une première réalisation d'un boîtier de relais d'accessoires 10 d'une turbine à gaz de moteur d'avion selon l'invention, la figure 1A étant une représentation globale du boîtier, la figure 1B étant une représentation éclatée de certains de ses éléments constitutifs et la figure 1C étant une représentation isolée d'un support 12 de roues dentées 14. On comprend que l'invention s'applique également aux turbines à gaz de moteurs d'hélicoptères, ainsi qu'aux groupes auxiliaires de puissance.

Ce boîtier 10 présente classiquement une forme générale de « banane » ou de « haricot » sensiblement parallélépipédique avec une face latérale avant 16 et une face latérale arrière 18 opposée à la face avant 16 et solidarisée avec celle-ci par l'intermédiaire du support 12 intercalée entre la face avant 16 et la face arrière 18. Pour réaliser cette solidarisation, la face avant 16 comprend une pluralité de perçages 20 formées sur sa périphérie et coopérant avec des perçages 22 de la périphérie du support 12 et des perçages 24 de la périphérie de la face arrière 18. On remarque que le support 12 comprend deux organes 26 d'accrochage chacun formé de deux chapes s'étendant à l'extérieur de l'enceinte délimitée par les faces avant 16 et arrière 18. Ces chapes permettent une fixation du boîtier 10 sur un carter de la turbomachine. Le boîtier 10 renferme un ou plusieurs trains (ou chaînes) d'engrenages formés par les roues dentées 14 engrenant ensemble qui s'étendent parallèlement aux faces latérales 16, 18 et qui ont classiquement pour fonction d'entraîner en rotation une pluralité d'accessoires (non représentés).

Les accessoires sont montés chacun sur l'une des faces latérales 16, 18 du boîtier. Chaque accessoire comporte en outre un arbre d'alimentation (non représenté) qui est entrainé en rotation par coopération de formes, par exemple au moyen de cannelures, avec un arbre 28 portant une roue dentée pour y être entrainé (figure 1C).

Un arbre de transmission de puissance (non représenté) prélève de la puissance mécanique sur un arbre de la turbine (non représenté sur les figures) pour la transmettre aux différentes roues dentées 14 du train d'engrenages. A cet effet, l'arbre de transmission de puissance est couplé en rotation au train d'engrenage au moyen de l'une des roues dentées du train d'engrenages.

Selon l'invention, chaque arbre 28 portant une roue dentée 14 est maintenu par un ou plusieurs paliers 30 à roulements qui sont tous portés par le support 12 intercalé latéralement entre les faces avant 16 et arrière 18 du boîtier 10. Le support 12 peut être constitué d'une platine de préférence métallique, avantageusement ajourée à la manière d'un treillis pour en limiter le poids.

Dans cette réalisation, les faces avant 16 et arrière 18 forment des couvercles servant de support aux équipements. A cette fin, les couvercles comportent des fixations (non représentées) qui permettent de maintenir les accessoires/équipements, ces fixations peuvent être des taraudages, des goujons, des brides males en formes de V permettant de fixer l'équipement via un collier femelle également en V, ou tout autre moyen de fixation de l'équipement.

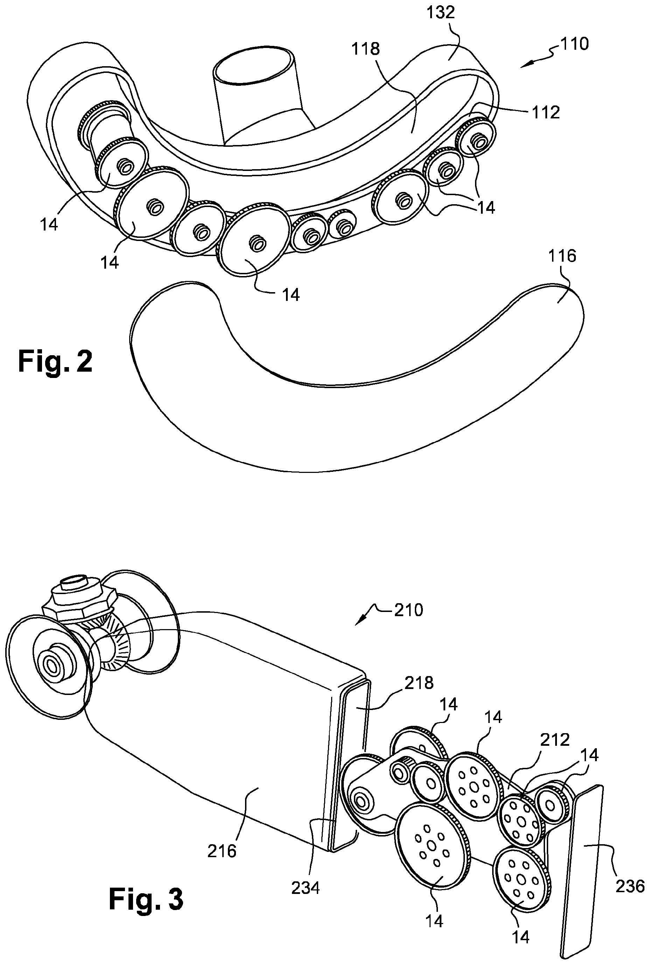

Dans une seconde réalisation de l'invention représentée en figure 2, le boitier 110 comprend également une face avant 116 et une face arrière 118 qui sont reliées l'une à l'autre par un rebord périphérique 132 solidaire de la face arrière 118 qui vient s'appliquer et se fixer sur la face avant 116. Ainsi, les faces avant 116 et arrière 118 délimitent ensemble une enceinte logeant le support portant les roues dentées 14. Les accessoires sont fixés sur les faces avant et arrière d'une manière connue de l'état de la technique telle comme par exemple expliqué en relation avec la première réalisation.

Dans une troisième réalisation d'un boîtier 210 selon l'invention représenté en figure 3, les faces avant 216 et arrière 218 sont formées sur un carter monobloc comprenant une ouverture 234 de montage du support portant la chaine cinématique comprenant le ou les trains d'engrenages. Comme cela est visible, cette ouverture 234 peut être obturée par un organe obturateur 236. Cet organe obturateur peut éventuellement être monobloc avec la pièce 212.

Comme évoqué précédemment, l'invention permet de réduire l'épaisseur du boitier dans une direction perpendiculaire aux faces avant et arrière. Les faces avant et arrière sont également plus simples à concevoir puisqu'elle n'assure plus de maintien de la chaine cinématique et peuvent dès lors avoir des formes plus complexes et mieux adaptées à l'environnement dans lequel le boîtier est destiné à être monté.

Dans les différentes réalisations de l'invention représentées aux figures, notons que le support peut comprendre des moyens de lubrification des paliers à roulements 28, ces moyens pouvant être par exemple un circuit d'huile intégré dans l'épaisseur du support 12, 112, 212 de manière à acheminer de l'huile jusqu'aux paliers. Il est ainsi possible de forer des canalisations dans le support 12, 112, 212 pour amener l'huile à différentes localisations du boîtier. Ces perçages peuvent être réalisés dans les bras structuraux qui composent le support. Il est encore possible de rapporter une canalisation sur le support 12, 112, 212.

## Revendications

1. Boîtier (10, 110, 210) de relais d'accessoires pour une turbomachine ayant une face latérale avant (16, 116, 216), une face latérale arrière (18, 118, 218) opposée à la face avant délimitant latéralement le boitier d'accessoires dans lequel est monté au moins un train d'engrenage composé de plusieurs roues dentées (14) engrenant ensemble, chaque roue dentée (14) étant portée par un arbre central (28), chaque arbre (28) étant guidé en rotation par des paliers (30) à roulements, **caractérisé en ce que** tous les paliers (30) à roulement sont portés par un même support (12, 112, 212) intercalé latéralement entre les faces avant (16, 116, 216) et arrière (18, 118, 218).

2. Boîtier selon la revendication 1, dans lequel ledit support (12, 112, 212) est formé par une platine ajourée présentant une forme en treillis comportant une pluralité de logement de réception des paliers à roulements (30).

3. Boîtier selon la revendication 1 ou 2, dans lequel le support (12, 112, 212) comprend des moyens de lubrification des paliers à roulements (30).

4. Boîtier selon l'une des revendications 1 à 3, dans lequel le support (12, 112, 212) comprend des moyens d'accrochage (26) du boitier (10, 110, 210) sur un carter d'une turbine à gaz.

5. Boîtier selon l'une des revendications 1 à 4, dans lequel au moins l'une de la face avant (16, 116, 216) et de la face arrière (18, 118, 218) supporte des équipements.

6. Boîtier selon l'une des revendications 1 à 5, dans lequel les faces avant (116) et arrière (118) sont reliées l'une à l'autre par un rebord périphérique (132) formant avec lesdites faces avant et arrière une enceinte étanche.

7. Boîtier selon l'une des revendications 1 à 5, dans lequel les faces avant (216) et arrière (218) sont formées sur un carter monobloc comprenant une ouverture (234) de montage dudit support (212).

8. Boîtier selon la revendication 7, comprenant un obturateur (236) monobloc avec ledit support (212) et apte à obturer l'ouverture (234).

9. Moteur à turbine à gaz d'avions ou d'hélicoptères, comprenant un boîtier d'accessoires selon l'une des revendications 1 à 8.

## Patentansprüche

1. Hilfsgerätegetriebegehäuse (10, 110, 210) für eine Turbomaschine bzw. ein Turbotriebwerk, enthaltend eine Vorderseitenfläche (16, 116, 216) und eine der Vorderseite gegenüberliegende Rückseitenfläche (18, 118, 218), die das Hilfsgerätegetriebegehäuse seitlich begrenzen, in welchem zumindest ein Getriebezug montiert ist, der aus mehreren miteinander kämmenden Zahnrädern (14) besteht, wobei jedes Zahnrad (14) von einer zentralen Welle (28) getragen wird, wobei jede Welle (28) über Wälzlager (30) drehbar gelagert ist,
**dadurch gekennzeichnet, dass** sämtliche Wälzlager (30) von ein und demselben Träger (12, 112, 21 2) getragen werden, der seitlich zwischen der Vorderseite (16, 116, 216) und der Rückseite (18, 118, 218) eingefügt ist.

2. Getriebegehäuse nach Anspruch 1,
wobei der Träger (12, 112, 212) aus einer durchbrochenen Platine gebildet ist, die eine Gitterform mit einer Vielzahl von Aufnahmen zur Aufnahme der Wälzlager (30) aufweist.

3. Getriebegehäuse nach Anspruch 1 oder 2,
wobei der Träger (12, 112, 212) Mittel zum Schmieren der Wälzlager (30) umfasst.

4. Getriebegehäuse nach einem der Ansprüche 1 bis 3,
wobei der Träger (12, 112, 212) Mittel (26) zum Einhängen des Getriebegehäuses (10, 110, 210) an einem Gasturbinengehäuse umfasst.

5. Getriebegehäuse nach einem der Ansprüche 1 bis 4,
wobei zumindest eine aus Vorderseite (16, 116, 216) und Rückseite (18, 118, 218) Vorrichtungen trägt.

6. Getriebegehäuse nach einem der Ansprüche 1 bis 5,
wobei die Vorderseite (116) und die Rückseite (118) durch einen umlaufenden Steg (132) miteinander verbunden sind, der mit der Vorder- und der Rückseite eine dichte Einfassung bildet.

7. Getriebegehäuse nach einem der Ansprüche 1 bis 5,
wobei die Vorderseite (216) und die Rückseite (218) an einem einteiligen Korpus ausgebildet sind, der eine Öffnung (234) zur Montage des Trägers (212) aufweist.

8. Getriebegehäuse nach Anspruch 7, enthaltend einen Verschluss (236), der einstückig mit dem Träger (212) ausgebildet und dazu geeignet ist, die Öffnung (234) zu verschließen.

9. Gasturbinentriebwerk für Flugzeuge oder Hubschrauber, enthaltend ein Hilfsgerätegetriebegehäuse nach einem der Ansprüche 1 bis 8.

## Claims

1. Accessory relay box (10, 110, 210) for a turbomachine having a front lateral face (16, 116, 216), a rear lateral face (18, 118, 218) opposite the front face laterally delimiting the accessory box in which is mounted at least one gear train composed of several gear wheels (14) meshing together, each gear wheel (14) being carried by a central shaft (28), each shaft (28) being guided in rotation by rolling bearings (30), **characterized in that** all the rolling bearings (30) are carried by a same support (12, 112, 212) inserted laterally between the front (16, 116, 216) and rear (18, 118, 218) faces.

2. Box according to claim 1, wherein said support (12, 112, 212) is formed by an apertured plate having a lattice shape with a plurality of rolling bearing receiving boxes (30).

3. Box according to claim 1 or 2, wherein the support (12, 112, 212) comprises means for lubricating the rolling bearings (30).

4. Box according to one of claims 1 to 3, wherein the support (12, 112, 212) comprises means (26) for attaching the box (10, 110, 210) to a casing of a gas turbine engine.

5. Box according to one of claims 1 to 4, wherein at least one of the front (16, 116, 216) and rear (18, 118, 218) faces supports equipment.

6. Box according to one of claims 1 to 5, in which the front (116) and rear (118) faces are connected to each other by a peripheral rim (132) forming a sealed enclosure with said front and rear faces.

7. Box according to one of claims 1 to 5, wherein the front (216) and rear (218) faces are formed on a one-piece box including an opening (234) for mounting said support (212).

8. Box according to claim 7, comprising a shutter (236) integral with said support (212) and capable of closing the opening (234).

9. Gas turbine engine for aeroplanes or helicopters, comprising an accessory box according to one of claims 1 to 8.
